# EUROPÄISCHE PATENTSCHRIFT

(11) **EP 0 669 180 B1**
(45) Veröffentlichungstag und Bekanntmachung des Hinweises auf die Patenterteilung: **03.01.2001**
(21) Anmeldenummer: 95102699.6
(22) Anmeldetag: 24.02.1995
(51) Int. Cl.: B23D 37/00

(54) **Werkzeugbestückte Werkzeugmaschine zum Drehräumen, Dreh-Drehräumen oder Drehen**
Machine tool with tool for turn-broaching, turning/turn-broaching or turning
Machine-outil avec outil pour brochage par rotation, tournage/brochage rotatif ou tournage

(30) Priorität: 25.02.1994 DE 4406272
(43) Veröffentlichungstag der Anmeldung: 30.08.1995
(73) Patentinhaber: BOEHRINGER WERKZEUGMASCHINEN GmbH, D-73033 Göppingen (DE)
(72) Erfinder:
(74) Vertreter: Alber, Norbert, Dipl.-Ing.

(56) Entgegenhaltungen:
- EP-A- 0 264 473
- EP-A- 0 328 958
- EP-A- 0 407 907
- EP-A- 0 542 026

## Beschreibung

Bauteile mit axial und radial zueinander versetzten, rotationssymmetrischen Bearbeitungsflächen aus Metall, wie etwa Kurbelwellen und Nockenwellen, werden auf Werkzeugmaschinen spanend bearbeitet mittels Drehräumen, Dreh-Drehräumen oder Drehen, bzw. einer Mischung von Einzelschritten dieser Bearbeitungsverfahren.

Dabei ist unter Drehräumen das langsame Entlangführen eines zu einer Kreiskontur oder einem Teil hiervon gebogenen Räumwerkzeuges an einer schnell rotierenden, zu bearbeitenden Rotationsfläche des Werkstückes zu verstehen. Wird dazwischen die meist scheibenförmige oder ringförmige Drehräum-Werkzeugeinheit angehalten, und nur eine einzige der in ihrem Umfangsbereich angeordneten Schneiden gegen das rotierende Werkstück bewegt wie beim Drehen, so wird dieses Mischverfahren als Dreh-Drehräumen bezeichnet.

Die hierfür verwendeten Maschinen ähneln im Aufbau einer Drehmaschine, wobei wenigstens ein, in der Regel jedoch zwei, jeweils in X- sowie Z-Richtung verfahrbare Werkzeugsupporte vorhanden sind.

Dabei werden wiederum zwei verschiedene Maschinen-Varianten und zugehörige Bearbeitungsweisen unterschieden:

Im einen Fall trägt jeder Werkzeugsupport eine - in der Regel scheibenförmige - Drehräum-Werkzeugeinheit. Durch Heranfahren dieser Werkzeugeinheit in X- und Z-Richtung an das Werkstück sowie Verschwenken der Drehräum-Werkzeugeinheit um die Schwenkachse kommen nacheinander die verschiedenen Schneiden der Drehräumwerkzeugeinheit für das Schruppen und Schlichten, sowie für die Lagerflächen-, Wangenbearbeitung, und Ölbunderstellung etc. zum Einsatz.

Dabei kann je nach Stabilität des Werkzeuges oder zusätzlich vorhandener Abstützmöglichkeiten die Werkzeugeinheit nur eines oder auch beider Supporte gleichzeitig am Werkstück im Eingriff sein.

Bei in der Regel mindestens vier Hauptlagerstellen einer PKW-Kurbelwelle ergibt sich hierdurch eine relativ lange Barbeitungszeit. Vorteilhaft ist dabei, daß bei erfolgter Abnutzung, aber noch nicht erschöpfter Lebensdauer einzelner Schneiden, der Werkzeugverschleiß durch zusätzliche Verfahrwege des entsprechenden Supportes in X- oder Z-Richtung über die Maschinensteuerung ausgeglichen werden kann bis zur Erschöpfung der Lebensdauer der entsprechenden Schneiden bzw. der ganzen Drehräum-Werkzeugeinheit.

Im anderen Fall wird mit sogenannten Satzwerkzeugen gearbeitet, wobei mehrere Drehräum-Werkzeugeinheiten entsprechend der Gesamtanzahl z. B. der zu bearbeitenden Hauptlager oder Hublager einer Kurbelwelle über ein axial durchgehendes zentrales Trägerelement zusammengefaßt, wie z. B. EP-A-0 328 958 zeigt.

Dieses Satzwerkzeug wird an seinen beiden Stirnseiten von jeweils einem von zwei Werkzeugsupporten oder einem einzigen, das Satzwerkzeug umgreifenden Support, aufgenommen sowie verschwenkt.

Für das Verfahren des Satzwerkzeuges in X- und ggfs. Z-Richtung sowie das Verschwenken des Satzwerkzeuges müssen die entsprechenden Bewegungen der beiden beteiligten Supporte synchronisiert sein. Mit einem solchen Satzwerkzeug ist die Bearbeitung sehr viel schneller durchführbar.

Ein Ausgleich von bereits eingetretenem Verschleiß an den Schneiden des Satzwerkzeuges kann jedoch nur für alle Drehräum-Werkzeugeinheiten des Satzwerkzeuges gemeinsam durchgeführt werden. Zusätzlich erlaubt es die geringe Stabilität der Werkstücke oft nicht, daß an allen Bearbeitungsstellen gleichzeitig Schneiden im Einsatz sind.

Deshalb müssen die einander entsprechenden Schneiden mit gleicher Funktion auf den verschiedenen Drehräum-Werkzeugeinheiten nicht in gleicher, sondern zueinander versetzter Winkellage angeordnet werden, so daß immer nur die gewünschte Anzahl von Schneiden gleichzeitig am Werkstück im Einsatz ist. Dadurch ist jedoch die verfügbare Umfangslänge der Drehräum-Werkzeugeinheiten für die notwendige Anzahl einzelner, unterschiedlicher Schneiden oft nicht mehr ausreichend.

Es ist daher die Aufgabe gemäß der Erfindung, eine Vorrichtung sowie ein Bearbeitungsverfahren zu schaffen, welches die hohe Produktivität der zuletzt beschriebenen Variante mit den individuellen Korrekturmöglichkeiten zur Erhöhung der Prozeß-Sicherheit der zuvor beschriebenen Variante in sich vereint, wobei insbesondere eine Nachrüstbarkeit vorhandener Maschinen mit jeweils mindestens einer zusätzlichen Drehräumwerkzeugeinheit pro Support möglich sein soll.

Diese Aufgabe wird durch die kennzeichnenden Merkmale des Anspruchs 1 gelöst. Vorteilhafte Ausführungsformen ergeben sich aus den Unteransprüchen.

Durch die Anordnung von wenigstens zwei axial beabstandeten Drehräum-Werkzeugeinheiten pro Support wird die Produktivität gegenüber einzelnen Drehräum-Werkzeugeinheiten verdoppelt, so daß bei einer Kurbelwelle mit vier Hauptlagern und zwei Supporten sogar die gleiche Bearbeitungszeit wie mit einem Satzwerkzeug erreicht werden kann.

Wenn zusätzlich der axiale Abstand der Schneiden der einen Werkzeugeinheit gegenüber den Schneiden der anderen Werkzeugeinheit verstellbar ist, und dies vorzugsweise während des Betriebes der Maschine und automatisch, können hierdurch nacheinander Gruppen von Bearbeitungsstellen bearbeitet werden, bei denen der axiale Abstand der Bearbeitungsstellen innerhalb der Gruppe unterschiedlich ist. Dies ist häufig bei Kurbelwellen mit einer ungeraden Anzahl von Hauptlagerstellen der Fall, indem dort Hauptlagerstelle Nummer 1 zu Hauptlagerstelle Nummer 2 einen anderen Axialabstand besitzt als Hauptlagerstelle Nummer 3 zu Hauptlagerstelle Nummer 4.

Dennoch kann mit einem Tandemwerkzeug, also zwei Drehräum-Werkzeugeinheiten an einem Support, in einem Arbeitsgang Hauptlager 1 plus 2 gemeinsam bearbeitet werden, und im nächsten Arbeitsgang Hauptlager 3 plus 4.

Um die Nebenzeiten geringzuhalten, erfolgt dabei die Relativverstellung der beiden Drehräumwerkzeugeinheiten in axialer Z-Richtung zueinander vorzugsweise mittels geeigneter, automatisch steuerbarer Stellantriebe etc. und nicht durch manuelles Betätigen von Stellschrauben oder anderen Stellelementen.

Weiterhin kann die Veränderung des axialen Abstandes zwischen den Schneiden der Drehräum-Werkzeugeinheiten eines Supportes dazu benutzt werden, um bereits eingetretenen Verschleiß an axial wirkenden Schneiden der Drehräum-Werkzeugeinheiten auszugleichen.

Die Veränderung des axialen Abstandes der Schneiden der verschiedenen Drehräum-Werkzeugeinheiten eines Supportes wird vorzugsweise dadurch erfolgen, daß der Relativabstand der jeweils ganzen Drehräum-Werkzeugeinheiten zueinander in Z-Richtung verändert wird.

Zu diesem Zweck ist es ausreichend, wenn eine der Drehräum-Werkzeugeinheiten gegenüber dem sie tragenden Werkzeugaufnahmeschaft axial fest ist und die anderen Drehräum-Werkzeugeinheiten eines Supportes entweder am Werkzeugaufnahmeschaft oder direkt an der axial festen Drehräum-Werkzeugeinheit axial einstellbar befestigt sind.

Dies kann für die manuelle axiale Verstellbarkeit mittels Stellschrauben, Distanzscheiben oder ähnlicher Stellelmente geschehen, in der Regel ist jedoch eine motorische Verstellbarkeit mittels mechanischer, hydraulischer oder pneumatischer Stellantriebe angestrebt.

Während zum Ausgleich bereits eingetretenen Verschleisses immer eine stufenlose Verstellmöglichkeit gegeben sein muß, ist eine Verstellung auf bestimmte, vorher festgelegte, Axialabstände der beiden Drehräum-Werkzeugeinheiten (z. B. die beiden Endlagen eines vorhandenen Verstellbereiches, die auf einfache Art und Weise pneumatisch angefahren werden können) dann ausreichend, wenn nur unterschiedlich axial beabstandete Bearbeitungsstellen bearbeitbar sein sollen, wie es etwa bei der sog. chaotischen Werkstückfolge erforderlich ist.

Die Korrektur eines bereits eingetretenen Verschleisses bei radial wirkenden Schneiden ist anders zu vollziehen, da sich diese in der Regel über den gesamten oder jedenfalls einen Großteil des Umfanges einer Drehräumwerkzeugeinheit erstrecken.

Theoretisch ist hierzu während des Betriebes der Maschine die radiale Verstellbarkeit der einzelnen Schneiden bzw. der die Schneiden tragenden Schneidenkassetten radial bezüglich der Schwenkachse der jeweiligen Drehräum-Werkzeugeinheit möglich, was jedoch einen hohen baulichen und steuerungstechnischen Aufwand aufgrund der großen Anzahl von Schneiden erfordert.

Günstiger ist es daher, die Schneiden auf den verschiedenen Drehräum-Werkzeugeinheiten eines Supportes hinsichtlich ihrer Drehwinkellage so über den Umfang zu verteilen, daß immer nur eine einzige Schneide und damit auch nur eine einzige Drehräum-Werkzeugeinheit pro Support am Werkstück in Eingriff ist, während die hinsichtlich des Drehwinkels vorausgehende bzw. zurückliegenden Schneiden der übrigen Drehräum-Werkzeugeinheiten dieses Supportes schon bzw. noch keinen Kontakt mit dem Werkstück mehr haben.

Der hierfür notwendige Winkelabstand zwischen den einzelnen Schneiden richtet sich nach dem wirksamen Durchmesser der Drehräum-Werkzeugeinheit sowie dem zu bearbeitenden Durchmesser des Werkstückes.

Wenn dies gegeben ist, kann für die einzige jeweils im Eingriff befindliche Schneide der gesamte Support in X-Richtung um einen solchen Korrekturwert verfahren werden, der den bereits bei dieser Schneide eingetretenen Verschleiß in radialer Richtung kompensiert. Auf diese Art und Weise kann auch eine axiale Korrektur für jede einzelne Schneide separat entweder durch Verfahren des Supportes oder nur der entsprechenden, bezüglich des Supportes beweglichen, Drehräum-Werkzeugeinheit (in Z-Richtung) durchgeführt werden, wobei für die axiale Korrektur jedoch die Korrektur mittels der Axialverstellung der gesamten Drehräum-Werkzeugeinheit vorzuziehen ist, da dadurch die Möglichkeit des gleichzeitigen Eingriffs mehrerer Schneiden und damit mehrerer Drehräum-Werkzeugeinheiten desselben Supportes erhalten bleibt.

Die Bedingung des Eingriffs nur einer Schneide pro Support muß im übrigen nicht für sämtliche Schneiden oder Schneidengruppen eingehalten werden.

Beispielsweise ist es für Schruppschneiden, deren Bearbeitungsergebnis manchmal weniger genau sein muß als das der Schlichtschneiden, ausreichend, beide bzw. alle Drehräumwerkzeugeinheiten eines Supportes gleichzeitig am Werkstück eingreifen zu lassen, mit dem Ziel der höchstmöglichen Spanabnahme pro Zeiteinheit.

Im Gegensatz dazu können dennoch bei dem gleichen Support die Schlichtschneiden wie vorangehend in ihrer Winkelposition zueinander versetzt angeordnet sein, um die Einzelkorrektur für die jeweils einzelne, im Einsatz befindliche Schneide zu ermöglichen.

Um die im Extremfall bei jedem Schneidenwechsel neu vorzunehmende Korrektur des Supports bzw. einer oder mehrerer Drehräum-Werkzeugeinheiten in X- und/oder Z-Richtung schnell durchführen zu können, ist es nicht nur notwendig, diese Verstellungen motorisch durchzuführen, sondern auch die Bestimmung und Vorgabe des Korrekturwertes automatisch durchzuführen.

Zu diesem Zweck ist - insbesondere für die Schlichtschneiden - eine automatische Werkzeugvermessung der einzelnen Schneiden im aufgespannten Zustand, also in der Werkzeugmaschine, in der jeweiligen Wirkrichtung der Schneiden (axial oder radial) vorzusehen. Dabei wird mittels eines Meßtasters oder anderer geeigneter Meßvorrichtungen die Schneide in ihrer Relativposition zum Support vermessen, und eine festgestellte Abweichung gegenüber dem Sollwert von der Maschinensteuerung in einen entsprechenden Korrekturwert umgerechnet, mit dem der Support bzw. die entsprechende Drehräum-Werkzeugeinheit, die die Scheibe trägt, verfahren wird, wenn die entsprechende Schneide in Einsatz kommt.

Demgegenüber können die Schruppschneiden, die manchmal weniger genau eingestellt sein müssen, nach wie vor außerhalb der Maschine auf der Drehräum-Werkzeugeinheit justiert und befestigt werden, um deren Nebenzeiten so gering wie möglich zu halten.

Aus dem gleichen Grunde ist es vorzugsweise auch vorzusehen, den momentan bekannten Verschleiß jeder Schneide entweder maschinenfest in der Maschinensteuerung oder auf einem dem jeweiligen Werkzeug zugeordneten, mobilen Datenträger zu speichern. Dadurch sind bei Entnahme der jeweiligen Drehräum-Werkzeugeinheit vor Ende deren Standzeit und späteren erneuten Einsatzes bereits die momentanen Verschleißzustände aller Schneiden dieser Drehräum-Werkzeugeinheiten bekannt, so daß keine erneute Verschleißmessung aller Schneiden beim Neueinsatz notwendig ist.

Eine Möglichkeit, radiale Korrekturen einzeln für jede Drehräum-Werkzeugeinheit und dort wiederum für jede einzelne Schneide, an einem Support durchzuführen und dennoch den gleichzeitigen Eingriff mehrerer Drehräum-Werkzeugeinheiten eines Supportes am Werkstück zwecks Erhöhung der Produktivität zu ermöglichen, besteht darin, eine radiale Verstellung einer Drehräum-Werkzeugeinheit gegenüber dem sie tragenden Schaft oder gegenüber der sie tragenden anderen, benachbarten Drehräum-Werkzeugeinheit mittels eines Exzenters oder Doppelexzenters vorzunehmen:

Dabei kann durch Verdrehen des Exzenters bzw. der beiden Teile des Doppelexzenters nicht nur der Betrag, sondern auch die Winkellage der Exzentrizität eingestellt werden, so daß selbst zwei gleiche, auf gleicher Winkellage angeordnete, Schneiden benachbarter Drehräum-Werkzeugeinheiten gleichzeitig, jedoch mit unterschiedlichen Korrekturwerten am Werkstück in Eingriff sein können. Die Winkellage der einzelnen Schneiden bleibt hiervon unberührt.

Bei zwei Drehräum-Werkzeugeinheiten an einem Support ist die eine radial gegenüber dem sie tragenden Schaft nicht verstellbar, die andere dagegen verstellbar. Der Korrekturvorgang der radial nicht verstellbaren Drehräum-Werkzeugeinheit erfolgt durch Verfahren des gesamten Supportes, der Korrekturvorgang der radial verstellbaren Drehräum-Werkzeugeinheit durch Verstellen des Exzenters.

Anstelle eines Exzenters bzw. Doppelexzenters sind auch andere konstruktive Lösungen möglich, die zum gleichen Ergebnis führen.

Ausführungsformen gemäß der Erfindung sind beispielhaft anhand der Figuren nachfolgend beschrieben. Es zeigen
- Fig. 1: eine Prinzipdarstellung der erfindungsgemäßen Werkzeugmaschine und
- Fig. 2: die Schneidenanordnung zweier Supporte in der Abwicklung und
- Fig. 3: eine Schnittdarstellung einer Drehräum-Werkzeugeinheit mit radialer Verstellung zum Werkzeug-Aufnahmeschaft.

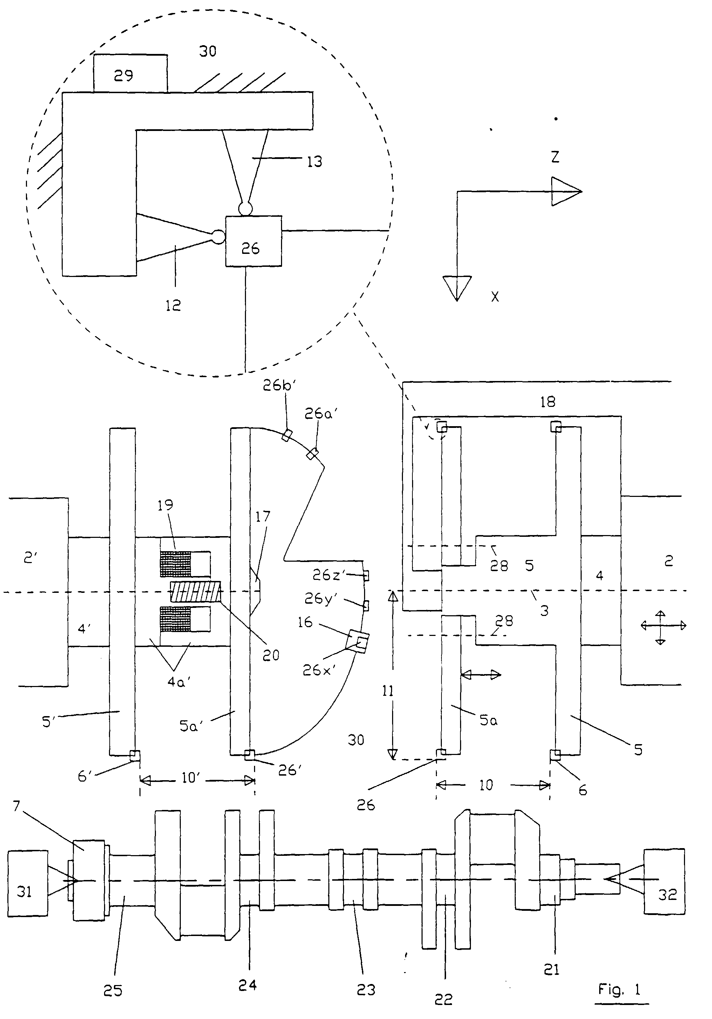

Fig. 1 zeigt in der Aufsicht eine Prinzipdarstellung einer erfindungsgemäßen Werkzeugmaschine. Dabei ist die zu bearbeitende Kurbelwelle 7, von der in diesem Fall die Hauptlagerstellen 21 bis 25 bearbeitet werden sollen, zwischen dem Reitstock 31 und dem Spindelstock 32 eingespannt und schnelldrehend angetrieben.

Auf dem nicht explizit dargestellten Bett 30 dieser Werkzeugmaschine 1 sind ferner zwei Supporte 2, 2' jeweils in X- und Z-Richtung unabhängig voneinander verfahrbar angeordnet.

Jeder Support trägt frei auskragend zwei axial beabstandete, etwa scheibenförmige Drehräum-Werkzeugeinheiten 5, 5a. Um den nötigen axialen Abstand zwischen dem Support 2, 2' und den Drehräum-Werkzeugeinheiten 5, 5a bzw. 5', 5a' zu schaffen, sind Support und Werkzeugeinheiten über einen Werkzeug-Aufnahmeschaft 4, 4' miteinander verbunden.

Bei der in Fig. 1 dargestellten Kurbelwelle mit fünf Hauptlagerstellen kann die Bearbeitung beispielsweise - je nach Stabilität - gleichzeitig oder nacheinander einerseits der Hauptlagerstellen 21 und 22 mittels des Supportes 2 und andererseits der Hauptlagerstellen 24 und 25 mittels des Supportes 2' erfolgen.

Die Hauptlagerstelle 23 wird anschließend von einem der Supporte 2, 2' aus bearbeitet.

Da jedoch mögliche Kollisionen mit dem Werkstück zu beachten sind, und z. B. von der Hauptlagerstelle 22 die Hauptlagerstelle 21 einen anderen Abstand einnimmt als die gegenüberliegende Hauptlagerstelle 23, und darüber hinaus auch andere Kurbelwellen mit anderen Abständen der zu bearbeitenden Lagerstellen bearbeitbar sein sollen, ist der axiale Abstand 10 bzw. 10' zwischen den Schneiden 6 bzw. 26 der Einheiten 5, 5a bzw. 5' und 5a' desselben Supportes veränderbar.

Beim Support 2 in der rechten Bildhälfte ist zu diesem Zweck die scheibenförmige Einheit 5 über den Schaft 4 in festem axialem Abstand dem Support 2 zugeordnet, der die Einheit 5 schwenkend bzw. langsam drehend um die Schwenkachse 3 antreiben kann.

Die zweite Einheit 5a ist nicht mit dem Schaft 4, sondern mit der ersten Einheit 5 dieses Supportes 2 verbunden, und kann in Ihrem axialen Abstand über Verdrehen der Stellschrauben 28 zumindest manuell verstellt werden.

Bei zu großer Kraglänge der Einheit 5a gegenüber dem Support 2 kann die Support-abgewandte, freie Stirnseite der Einheit 5a zusätzlich mittels einer Brücke 18 abgestützt werden, die in einer stabilen Ausführung andererseits mit dem Support auf einer dem Werkstück abgewandten Seite befestigt ist, und axial, also in Z-Richtung, längenveränderbar ausgeführt ist.

Demgegenüber ist beim linken Support 2' sowohl die dem Support 2' nächstliegende Drehräum-Werkzeugeinheit 5', als auch die entfernter liegende Einheit 5a' auf dem vorzugsweise durchgehenden Werkzeug-Aufnahmeschaft 4' befestigt.

Zum Zwecke der Abstandsveränderung in axialer Richtung zwischen den beiden Einheiten 5' und 5a' ist in diesem Falle dazwischen der Schaft 4' zweiteilig und längenveränderbar ausgeführt, vorzugsweise mittels eines zentral auf der Schwenkachse 3' angeordneten Stellantriebes 20, der motorisch angetrieben und automatisch angesteuert werden kann, wobei die Vorgabewerte von der Steuerungseinheit der Werkzeugmaschine geliefert werden.

Ebenso könnte jede einzelne Einheit 5', 5a' mit einem entsprechend langen, längenveränderbaren Teil eines Werkzeug-Aufnahmeschaftes 4 versehen sein, welcher dann auf die freie Stirnseite der letzten auskragenden Drehräum-Werkzeugeinheit 5', 5a' aufgesetzt wird.

Wichtig ist, daß die Befestigung zusätzlicher Werkzeugeinheiten 5a, 5a' sehr schnell, vorzugsweise mittels eines einzigen, zentralen Schnellverschlusses 17 möglich ist, um die Rüstzeiten niedrig zu halten.

Wie in der ausgeklappten Teil-Darstellung in Figur 1 (Blickrichtung: Z) der Drehräum-Werkzeugeinheit 5a' dargestellt, tragen diese Einheiten in ihrem Umfangsbereich einzelne Schneiden 26a', 26b'... 26z' die direkt oder mittels Schneidenkasette 16 an der Einheit justiert und befestigt sind. Dabei muß - je nach notwendiger Anzahl der einzelnen Schneiden - nicht der gesamte Umfang einer Drehräum-Werkzeugeinheit 5', 5a', 5a, 5 mit Schneiden besetzt sein.

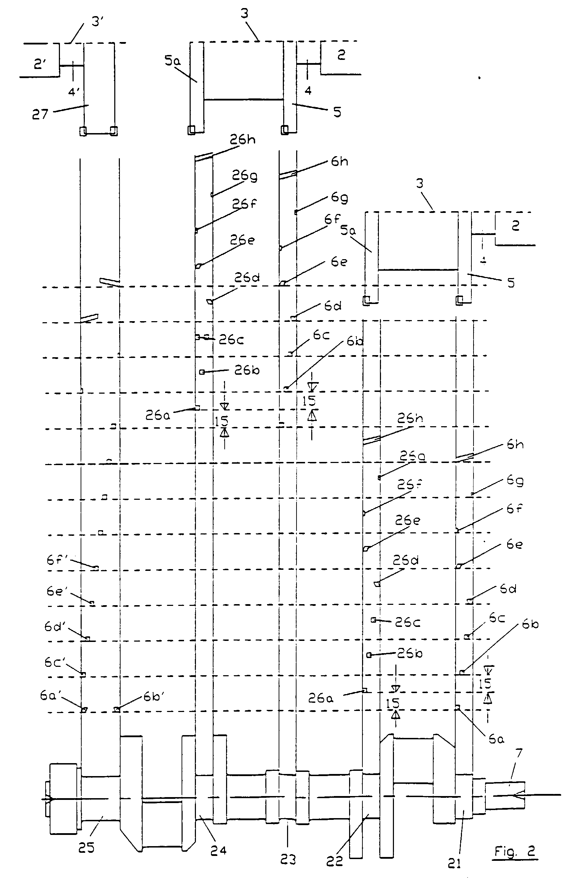

Die Zuordnung der einzelnen Schneiden auf den verschiedenen Werkzeugeinheiten und den verschiedenen Supporten ist genauer in Fig. 2 dargestellt.

Der Detailvergrößerung in Fig. 1 ist ferner eine Meßvorrichtung für die Position der Schneiden 6, 26 usw. zu entnehmen, die in in der Regel fest oder in eine Meßposition einschwenkbar am Bett 30 der Werkzeugmaschine 1 befestigt ist und das auf der Werkzeugmaschine 1, also dem Support 2, befindliche Werkzeug vermisst, indem mittels der axialen Meßvorrichtung 12 und/oder der radialen Meßvorrichtung 13 die entsprechenden Schneidkanten der Schneide 26 abgetastet werden.

Bei fest am Bett der Werkzeugmaschine angeordneter Meßvorrichtung 12, 13 wird die Schneide 26 mittels des Supportes 2 in X- und Z-Richtung bis zum Kontakt mit den Meßvorrichtungen 12, 13 verfahren (wobei selbstverständlich auch eine definierte Drehlage dieser Schneide 26 gegenüber der Schwenkachse 3 eingehalten werden muß).

Bei Kontakt werden die Positionskoordinaten des Supportes 2 ermittelt, woraus sich die Relativlage der Schneidkanten der Schneide 26 gegenüber dem Support und damit auch absolut gegenüber dem Bett der Werkzeugmaschine 1 ergibt.

Es ist auch umgekehrt möglich, zu diesem Zweck den Support 2 und somit auch die Schneide 26 in eine definierte Meßposition, beispielsweise die Null-Lage, zu verfahren, und die Meßvorrichtungen 12, 13 in den entsprechenden Richtungen verfahrbar gegenüber dem Bett 30 auszubilden.

Auf diese Art und Weise kann sehr genau der Ist-Wert der Schneidkannten der Schneide 26 in X- sowie Z-Richtung gegenüber dem Support 2 ermittelt werden.

Durch Vergleich mit den entsprechenden Soll-Werten werden von einer Steureinheit 29 die Korrekturwerte ermittelt.

Ist die axiale Schneidkannte einer Schneide 6 der axial fest gegenüber dem Support angeordneten Drehräum-Werkzeugeinheit 5 abgenutzt, und muß hierfür eine Korrektur in Z-Richtung vorgenommen werden, so geschieht dies durch Verfahren des Supports 2 in Z-Richtung.

Ist davon ausgehend eine weitere Korrektur einer Schneide 26 der Drehräum-Werkzeugeinheit 5a desselben Supportes in axialer Richtung notwendig, wird diese Einheit 5a in Z-Richtung gegenüber der Einheit 5 über die Stellschrauben 28 verschoben, bis der angestrebte axiale Abstand 10 bzw. 10' wieder gegeben ist.

Die durchzuführenden axialen Korrekturen bei den verschiedenen Werkzeugeinheiten 5, 5a eines Supportes 2 sind jedoch nicht unbedingt für alle Schneiden am Umfang gleichgroß. Um diese Korrekturen für jede der Schneiden 6a, 6b, 6c bzw. 26a etc. separat durchführen zu können, ohne hierbei den Bearbeitungsfortschritt negativ zu beeinflussen, sind - wie besser in Fig. 2 zu erkennen - die einander entsprechenden Schneiden 6a bzw. 26a, 6b bzw. 26b etc. der verschiedenen Drehräum-Werkzeugeinheiten 5, 5a eines Supportes 2 nicht auf der gleichen Winkelposition angeordnet.

Wie in der Abwicklung im oberen Teil der Fig. 2 zu erkennen, ist zwischen allen Schneiden 6a, 26a, 6b, 26b, etc. ein Winkelabstand 15 eingehalten, der so groß ist, daß von einem Support 2 momentan nur jeweils maximal eine Schneide an der Kurbellwelle 7 im Eingriff sein kann.

Bei dem während des Dreh-Drehräumens langsamen Weiterdrehen der Werkzeugeinheiten um die Schwenkachsen 3, 3' kann somit - in der Regel ohne Anhalten der Schwenkbewegung - zwischen dem Ausereingriffgeraten einer Schneide und dem Ineingriffgeraten der nächsten Schneide die entsprechende Korrekturbewegung in X und/oder Z-Richtung mittels des Supportes 2 oder der entsprechenden, axial beweglich ausgebildeten Drehräum-Werkzeugeinheit 5a vollzogen werden.

Fig. 2 ist ferner zu entnehmen, daß in diesem Falle mittels des Supportes 2 zunächst die Hauptlagerstellen 21 und 22 in einem Arbeitsgang bearbeitet werden, und anschließend die Hauptlagerstellen 23 und 24 ebenfalls wieder in einem Arbeitsgang mittels des gleichen Supportes 2.

Während dieser ganzen Zeit wird mittels des Supportes 2', der nur eine einzige Drehräum-Werkzeugeinheit 5' aufweist, die deutlich breitere Hauptlagerstelle 25 bearbeitet, da hierfür bei gleicher Schneidenbreite eine höhere Schneidenanzahl und damit längere Bearbeitungszeit notwendig ist.

Die beschriebene Vermessung von Schneiden mittels einer Meßvorrichtung 12 bzw 13 empfiehlt sich vorzugsweise für die bei den Feinbearbeitungsvorgängen eingesetzten Schlichtschneiden, während die Position der Schruppschneiden nur auf Zehntelmillimeter genau bekannt sein muß, so daß bereits eingetretener Verschleiß nicht durch Korrekturwege ausgeglichen werden muß.

Dies erspart die - in Zeitabständen zu wiederholende - Vermessung zumindest bei den Schruppschneiden und senkt damit die Nebenzeiten der Werkzeugmaschine, da die Schruppschneiden außerhalb der Werkzeugmaschine 1 an einem separatem Werkzeug-Rüstplatz an der Drehräum-Werkzeugeinheit 5, 5a, 5', 5a' justiert und befestigt werden können.

Vorwiegend aus den Gründen des Werkzeugverschleißes ist weiterhin auch eine radiale Korrekturmöglichkeit der Schneiden 6, 26 wünschenswert.

Da hierfür eine radiale Verstellung jeder einzelnen Schneide gegenüber der sie tragenden Werkzeugeinheit 5, 5a, 5' einen zu hohen Bauaufwand erfordert, stehen zwei unterschiedliche Möglichkeiten zur Verfügung:

Im einen Fall wird durch Einhaltung des Winkelabstandes 15 zwischen den einzelnen Schneiden eines Supportes 2, 2' sichergestellt, daß jeweils nur eine einzige Schneide pro Support im Eingriff sein kann, so daß vor Eingriff der jeweils nächsten Schneide wiederum die Korrekturbewegung in X-Richtung durch Verfahren des Supports 2, 2' erfolgen kann.

Im anderen Fall sollen die Schneiden zweier oder gar mehrerer Werkzeugeinheiten 5, 5a usw. ein und desselben Supportes 2 gleichzeitig im Eingriff sein, also die einander entsprechenden Schneiden 6a, 26a ohne Winkelabstand 15 auf der gleichen Mantellinie und damit Winkelposition angeordnet sein.

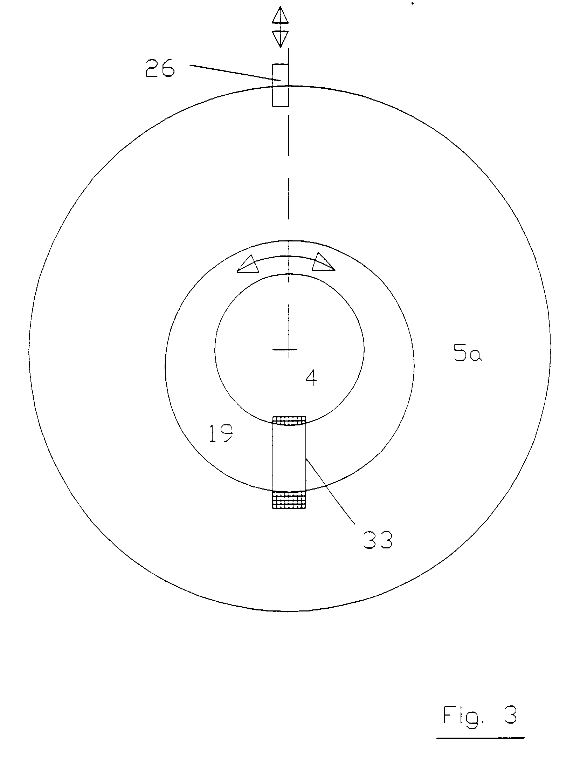

Wie Fig. 3 mit Blick in Z-Richtung zeigt, kann auch in diesem Fall ein radiale Verstellung einer Schneide 26 durch radiale Verstellung der gesamten, sie tragenden Scheibe 5a bezüglich der Schwenkachse 3 des Supportes 2 erfolgen.

Zu diesem Zweck ist die ringförmige oder scheibenförmige Drehräum-Werkzeugeinheit 5a nicht auf dem zentrischen Werkzeug-Aufnahmeschaft 4 (oder der axial versetzten weiteren Einheit 5) direkt gelagert, sondern mittels eines dazwischen konzentrisch angeordnetnen Exzenters 19. Durch eine geeignete Verdrehsicherung 33 zwischen der Werkzeugeinheit 5a und dem Schaft 4 ist eine Relativverdrehung dieser beiden Bauteile zueinander ausgeschlossen, so daß die radial zu verstellende Schneide 26 immer in der gleichen Winkellage bezüglich des Werkzeug-Aufnahmeschafftes 4 bleibt.

Durch Verdrehen des Exzenters 19 um maximal 180° ist jedoch innerhalb vorgegebener Grenzen hierdurch eine Radialverstellung der gesamten Drehräum-Werkzeugeinheit 5a relativ zum Schaft 4 und damit auch relativ zu den benachbarten Drehräum-Werkzeugeinheiten desselben Supportes möglich.

## Patentansprüche

1. Werkzeugbestückte Werkzeugmaschine zum Drehräumen, Dreh-Drehräumen oder Drehen, mit
- wenigstens einem in X- und Z-Richtung verfahrbaren Werkzeugsupport,
- die jeweils wenigstens eine in Z-Richtung gerichtete, um eine in Z-Richtung liegende Schwenkachse schwenkbare bzw. drehbare Werkzeugaufnahme aufweisen, und
- jeder Werkzeugsupport (2, 2') wenigstens zwei axial (Z-Richtung) beabstandete Drehräum-Werkzeugeinheiten (5, 5', 5a, 5a') mit Schneiden (6, 26, 6', 26') im Umfangsbereich trägt,
**dadurch gekennzeichnet, daß**
die Werkzeugmaschine wenigstens zwei in X-Richtung unabhängig voneinander verfahrbare Werkzeugsupporte (2, 2') aufweist.

2. Werkzeugmaschine nach Anspruch 1,
**dadurch gekennzeichnet, daß**
die Drehräum-Werkzeugeinheiten (5, 5', 5a, 5a') von dem sie tragenden Werkzeugsupport (2, 2') jeweils frei auskragen.

3. Werkzeugmaschine nach Anspruch 1 oder 2,
**dadurch gekennzeichnet, daß**
der axiale Abstand (10) der Schneiden (6, 26 bzw. 6', 26') der Drehräum-Werkzeugeinheiten (5, 5a), die vom gleichen Werkzeugsupport getragen werden, zueinander verstellbar ist.

4. Werkzeugmaschine nach Anspruch 1, 2 oder 3,
**dadurch gekennzeichnet, daß**
die wenigstens zwei Werkzeugsupporte (2, 2') der Werkzeugmaschine (1) in Z-Richtung unabhängig voneinander verfahrbar sind.

5. Werkzeugmaschine nach einem der Ansprüche 1 bis 4,
**dadurch gekennzeichnet, daß**
die Werkzeugaufnahmen gegen den jeweils anderen Werkzeugsupport (2', 2) gerichtet sind.

6. Werkzeugmaschine nach eine der vorhergehenden Ansprüche,
**dadurch gekennzeichnet, daß**
der radiale Abstand der Schneiden (6, 6', 26, 26') von der Schwenkachse (3, 3') der jeweiligen Drehräum-Werkzeugeinheiten (5, 5', 5a, 5a') verstellbar ist.

7. Werkzeugmaschine nach einem der vorhergehenden Ansprüche,
**dadurch gekennzeichnet, daß**
der axiale Abstand (10) verstellbar ist durch Veränderung der Lage wenigstens einer der Drehräum-Werkzeugeinheiten (5', 5a) in Z-Richtung relativ zum Werkzeugaufnahmeschaft (4').

8. Werkzeugmaschine nach Anspruch 7,
**dadurch gekennzeichnet, daß**
- eine der Drehräum-Werkzeugeinheiten (5) in Z-Richtung fest mit dem Werkzeugaufnahmeschaft (4) verbunden ist und
- wenigstens eine weitere Drehräum-Werkzeugeinheit (5a) in Z-Richtung verstellbar an der in Z-Richtung festen Drehräumwerkzeugeinheit (5) angeordnet ist.

9. Werkzeugmaschine nach einem der vorhergehenden Ansprüche,
**dadurch gekennzeichnet, daß**
die Verstellbarkeit des axialen und /oder radialen Abstandes (10) der Schneiden (6, 26 bzw. 6', 26') zueinander während des Betriebes der Werkzeugmaschine (1) und in Abhängigkeit von der Drehlage der Drehräum-Werkzeugeinheiten (5, 5a) möglich ist.

10. Werkzeugmaschine nach einem der vorhergehenden Ansprüche,
**dadurch gekennzeichnet, daß**
- die Werkzeugmaschine (1) eine automatische Meßvorrichtung (12) zum Vermessen der axialen Lage der Schneiden (6, 6', 26, 26') bezüglich des Supportes (2, 2') bzw. des Bettes (30) der Werkzeugmaschine (1) umfasst und
- eine Steuereinheit (29) den dabei festgestellten Korrekturwert als Differenz zwischen Sollwert und Istwert errechnet und automatisch die Korrektur des axialen Abstandes (10) der Schneiden (6, 26), sowie ggfs. eine Bewegung des entsprechenden Supportes (2) in Z-Richtung bewirkt.

11. Werkzeugmaschine nach einem der Ansprüche 1 bis 9,
**dadurch gekennzeichnet, daß**
- die Werkzeugmaschine eine automatische Meßvorrichtung (13) zum Vermessen der radialen Lage der Schneiden (6, 6', 26, 26') relativ zum Support (2, 2') oder zum Bett (30) der Werkzeugmaschine (1) umfaßt und
- eine Steuereinheit (29) den dabei festgestellten Korrekturwert als Differenz zwischen Sollwert und Istwert errechnet und automatisch die Korrektur des radialen Abstandes (11) der jeweiligen Schneide (6, 26) in X-Richtung bewirkt.

12. Werkzeugmaschine nach einem der vorhergehenden Ansprüche,
**dadurch gekennzeichnet, daß**
die vom Support (2, 2') weiter entfernte Drehräuum-Werkzeugeinheit (5a, 5a') auf einem Support (2, 2') mit einer vorhandenen Drehräum-Werkzeugeinheit (5, 5') nachrüstbar ausgebildet ist.

13. Werkzeugmaschine nach Anspruch 12,
**dadurch gekennzeichnet, daß**
die nachrüstbare Drehräum-Werkzeugeinheit (5a, 5a') auf vorhandenen Drehräum-Werkzeugeinheiten (5, 5') bzw. dem vorhandenen Werkzeugaufnahmeschaft (4, 4') mittels Schnellverschluß definiert befestigbar ist.

14. Werkzeugmaschine nach einem der vorhergehenden Ansprüche,
**dadurch gekennzeichnet, daß**
die einander entsprechenden Schneiden (6, 26 bzw. 6', 26') eines Supportes (2 bzw. 2') in ihrer Winkellage bezüglich der Schwenkachse (3, 3') so zueinander versetzt angeordnet sind, daß bei Eingriff einer Schneide (6 bzw. 6') der einen Drehräum-Werkzeugeinheit (5 bzw. 5') die bezüglich der Winkellage benachbarten Schneiden (26, 6 bzw. 26', 6') der anderen Drehräum-Werkzeugeinheit (5' bzw. 5) desselben Supportes (2 bzw. 2')keinen Kontakt mit der Bearbeitungsstelle haben.

15. Werkzeugmaschine nach einem der vorhergehenden Ansprüche,
**dadurch gekennzeichnet, daß**
die Drehräum-Werkzeugeinheiten universell an allen vorhandenen Supporten (2, 2') und in jeder axialen Position bezüglich des Werkzeugaufnahmeschaftes (4, 4') einsetzbar sowie untereinander austauschbar sind.

16. Werkzeugmaschine nach einem der vorhergehenden Ansprüche,
**dadurch gekennzeichnet, daß**
das freie Ende des Werkzeugaufnahmeschaftes (4, 4') mittels einer Brücke (18), die fest mit dem zugehörigen Support (2, 2') verbunden ist, abgestützt ist.

17. Werkzeugmaschine nach einem der vorstehenden Ansprüche,
**dadurch gekennzeichnet, daß**
eine Speichereinheit, die der Werkzeugmaschine oder der Drehräum-Werkzeugeinheit (5, 5') zugeordnet ist, die axialen und radialen Korrekturwerte der einzelnen Schneiden (6, 6') in der jeweils aktuellsten gemessenen Fassung auch bei Abrüsten der jeweiligen Drehräum-Werkzeugeinheit (5, 5a) dauerhaft speichert.

18. Verfahren zur spanenden Bearbeitung von rotationssymmetrischen Werkstückflächen
- durch Dreh-Drehräumen mittels wenigstens einer auf einem Werhzeugsupport in X- und Z-Richtung verfahrboren Drehräum-Werkzeugeinheit (5, 5') mit mehreren Schneiden im Umfangsbereich,
- wobei jeder Support mehrere axial beabstandete, gemeinsam schwenkbare Drehräum-Werkzeugeinheiten (5, 5') trägt,
- zur Verwendung der Werkzeugmaschine nach einem der vorhergehenden Ansprüche,
**dadurch gekennzeichnet, daß**
vor dem jeweiligen Kontaktieren des Werkstückes durch eine Schneide (6, 26)
- in axialer (Z-Richtung) ein Verfahren der jeweiligen Drehräum-Werkzeugeinheit (5, 5a) bzw. des gesamten Supportes (2, 2') um den Korrekturwert erfolgt und/oder
- in radialer Richtung ein Verfahren der die Schneide (6, 26) tragenden Drehräum-Werkzeugeinheit (5, 5') gegenüber der radial fest am Support (2) befestigten Drehräumwerkzeugeinheit (5) erfolgt.

19. Verfahren nach Anspruch 18,
**dadurch gekennzeichnet, daß**
jeweils nur eine Schneide (6, 26) über die gesamten, von einem Support (2, 2') getragenen Drehräum-Werkzeugeinheiten (5, 5') momentan im Eingriff ist.

20. Verfahren nach Anspruch 18 oder 19,
**dadurch gekennzeichnet, daß**
für die Durchführung der Korrekturbewegungen die Schwenkbewegung der Drehräum-Werkzeugeinheiten (5, 5a) nicht unterbrochen wird.

## Claims

1. A tool-equipped machine tool for rotational broaching, turning-rotational broaching or turning, comprising
- at least one tool support which is displaceable in the X- and Z-direction
- and which each have at least one tool receiving means which is directed in the Z-direction and which is rotatable or pivotable about a pivot axis disposed in the Z-direction, and
- each tool support (2, 2') carries at least two axially (Z-direction) spaced rotational broaching tool units (5, 5', 5a, 5a') with cutting edges (6, 26, 6', 26') in the peripheral region,
characterised in that
the machine tool has at least two tool supports (2, 2') which are displaceable independently of each other in the X-direction.

2. A machine tool according to claim 1 characterised in that the rotational broaching tool units (5, 5', 5a, 5a') each project freely from the respective tool support (2, 2') carrying them.

3. A machine tool according to claim 1 or claim 2 characterised in that the axial spacing (10) of the cutting edges (6, 26 and 6', 26' respectively) of the rotational broaching tool units (5, 5a) which are carried by the same tool support is adjustable relative to each other.

4. A machine tool according to claim 1, claim 2 or claim 3 characterised in that the at least two tool supports (2, 2') of the machine tool (1) are displaceable independently of each other in the Z-direction.

5. A machine tool according to one of claims 1 to 4 characterised in that the tool receiving means are directed towards the respective other tool support (2', 2).

6. A machine tool according to one of the preceding claims characterised in that the radial spacing of the cutting edges (6, 6', 26, 26') from the pivot axis (3, 3') of the respective rotational broaching tool units (5, 5', 5a, 5a') is adjustable.

7. A machine tool according to one of the preceding claims characterised in that the axial spacing (10) is adjustable by varying the position of at least one of the rotational broaching tool units (5', 5a) in the Z-direction relative to the tool receiving shank (4').

8. A machine tool according to claim 7 characterised in that
- one of the rotational broaching tool units (5) is fixedly connected in the Z-direction to the tool receiving shank (4), and
- at least one further rotational broaching tool unit (5a) is arranged adjustably in the Z-direction on the rotational broaching tool unit (5) which is fixed in the Z-direction.

9. A machine tool according to one of the preceding claims characterised in that adjustability of the axial and/or radial spacing (10) of the cutting edges (6, 26 and 6', 26' respectively) with respect to each other is possible during operation of the machine tool (1) and in dependence on the rotational position of the rotational broaching tool units (5, 5a).

10. A machine tool according to one of the preceding claims characterised in that
- the machine tool (1) includes an automatic measuring device (12) for measuring the axial position of the cutting edges (6, 6', 26, 26') with respect to the support (2, 2') or the bed (30) of the machine tool (1), and
- a control unit (29) calculates the correction value which is established in that case as the difference between the reference value and the actual value and automatically implements correction of the axial spacing (10) of the cutting edges (6, 26) and possibly a movement of the corresponding support (2) in the Z-direction.

11. A machine tool according to one of claims 1 to 9 characterised in that
- the machine tool includes an automatic measuring device (13) for measuring the radial position of the cutting edges (6, 6', 26, 26') with respect to the support (2, 2') or the bed (30) of the machine tool (1), and
- a control unit (29) calculates the correction value which is established in that case as the difference between the reference value and the actual value and automatically implements correction of the radial spacing (11) of the respective cutting edge (6, 26) in the X-direction.

12. A machine tool according to one of the preceding claims characterised in that the rotational broaching tool u nit (5a, 5a') which is further away from the support (2, 2') is adapted to be subsequently fitted on a support (2, 2') with an existing rotational broaching tool unit (5, 5').

13. A machine tool according to claim 12 characterised in that the rotational broaching tool unit (5a, 5a') which is adapted to be subsequently fitted can be definedly fixed on existing rotational broaching tool units (5, 5') or on the existing tool receiving shank (4, 4') by means of a quick-action lock.

14. A machine tool according to one of the preceding claims characterised in that the mutually corresponding cutting edges (6, 26 and 6', 26' respectively) of a support (2 and 2' respectively) are so arranged in mutually displaced relationship in regard to their angular position with respect to the pivot axis (3, 3') that upon engagement of a cutting edge (6 and 6' respectively) of the one rotational broaching tool unit (5 and 5' respectively) the cutting edges (26, 6 and 26', 6' respectively) which are adjacent are regard to angular position of the other rotational broaching tool unit (5' and 5 respectively) of the same support (2 and 2' respectively) do not have any contact with the machining location.

15. A machine tool according to one of the preceding claims characterised in that the rotational broaching tool units can be universally fitted to all existing supports (2, 2') and in any axial position with respect to the tool receiving shank (4, 4') and are interchangeable with each other.

16. A machine tool according to one of the preceding claims characterised in that the free end of the tool receiving shank (4, 4') is supported by means of a bridge (18) which is fixedly connected to the associated support (2, 2').

17. A machine tool according to one of the preceding claims characterised in that a storage unit which is associated with the machine tool or the rotational broaching tool unit (5, 5') permanently stores the axial and radial correction values of the individual cutting edges (6, 6') in the respectively most up-to-date measured form even upon removal of the respective rotational broaching tool unit (5, 5a).

18. A method of cutting machining of rotationally symmetrical workpiece surfaces
- by turning-rotational broaching by means of at least one rotational broaching tool unit (5, 5') having a plurality of cutting edges in the peripheral region, said tool unit being displaceable on a tool support in X- and Z-directions,
- wherein each support carries a plurality of axially spaced, jointly pivotable rotational broaching tool units (5, 5'),
- in particular for use of the machine tool according to one of the preceding claims,
characterised in that prior to respective contacting of the workpiece by a cutting edge (6, 26)
- in the axial (Z-direction) displacement of the respective rotational broaching tool unit (5, 5a) or the entire support (2, 2') by the correction value is effected and/or
- in the radial direction displacement of the rotational broaching tool unit (5, 5') carrying the cutting edge (6, 26) with respect to the rotational broaching tool unit (5) radially fixedly secured to the support (2) is effected.

19. A method according to claim 18 characterised in that only one respective cutting edge (6, 26) over the entire rotational broaching tool units (5, 5') carried by a support (2, 2') is momentarily in engagement.

20. A method according to claim 18 or claim 19 characterised in that the pivotal movement of the rotational broaching tool units (5, 5a) is not interrupted for carrying out the correction movements.

## Revendications

1. Machine outil avec outil pour brochage par rotation, tournage/brochage ou tournage, comprenant
• au moins un porte-outils mobile dans la direction des X et des Y,
• qui présente au moins un logement d'outil dirigé dans le sens des Z, rotatif ou pivotant autour d'un axe de pivotement dans le sens des Z et
• chaque porte-outils (2, 2') porte au moins deux unités (5, 5', 5a, 5a') d'outils de brochage par rotation à distance axiale (sens des Z) avec des lames (6, 26, 6', 26') dans le sens périphérique,
caractérisé en ce que
la machine-outil présente au moins deux porte-outils (2, 2') mobiles dans le sens des X indépendamment l'un de l'autre.

2. Machine-outil selon la revendication 1 ou 2,
Caractérisée en ce que
les unités d'outil de brochage par rotation (5, 5', 5a, 5a') sont en porte-à-faux du porte-outils (2, 2') qui les portent.

3. Machine-outil selon la revendication 1 ou 2,
Caractérisée en ce que
la distance axiale (10) des lames (6, 26 respectivement 6', 26') des unités d'outil de brochage par rotation (5, 5a) qui sont portées par le même porte-outils, est réglable.

4. Machine-outils selon la revendication 1, 2 ou 3
caractérisée en ce que
au moins les deux porte-outils (2, 2') de la machine-outil (1) sont mobiles dans la direction Z indépendamment l'un de l'autre.

5. Machine-outils selon l'une des revendications 1 à 4,
caractérisée en ce que
les logements d'outils sont dirigés vers les autres porte-outils (2', 2).

6. Machine-outils selon l'une des revendications précédentes,
caractérisée en ce que
la distance radiale des lames (6, 6', 26, 26') entre les axes de pivotement (3, 3') des unités (5, 5', 5a, 5a') d'outil de brochage par rotation est réglable.

7. Machine-outils selon l'une des revendications précédentes,
caractérisée en ce que
la distance axiale (10) est réglable par modification de la position d'au moins l'une des unités d'outil de brochage par rotation (5', 5a) dans le sens des Z par rapport à la tige de logement d'outil (4').

8. Machine-outils selon la revendication 7,
caractérisée en ce que
• l'une des unités d'outil de brochage par rotation (5) est reliée dans le sens des Z fixement à la tige de logement d'outil (4) et
• au moins une autre unité d'outil de brochage par rotation (5a) est disposée de manière réglable dans le sens Z sur l'unité d'outil de brochage (5) par rotation fixe dans le sens des Z.

9. Machine-outil selon l'une des revendications précédentes,
caractérisée en ce que
la réglabilité de la distance radiale et/ou axiale (10) des lames (6, 26 respectivement 6', 26') l'une par rapport à l'autre est possible pendant le fonctionnement de la machine-outil (1) et en fonction de la position de rotation des unités d'outils de brochage (5, 5a) par rotation.

10. Machine-outil selon l'une des revendications précédentes,
caractérisée en ce que
• la machine-outil (1) comprend un dispositif de mesure automatique (12), pour la mesure de la position axiale des lames (6, 6', 26, 26") par rapport au support (2, 2') respectivement du banc (30) de la machine-outil (1) et
• une unité de commande (29) calcule la valeur de correction ainsi définie en tant que différence entre la valeur réelle et la valeur de consigne et provoque automatiquement la correction de la distance axiale (10) des lames (6, 26) ainsi qu'éventuellement un mouvement du support correspondant (2) dans le sens des Z.

11. Machine-outil selon l'une des revendications 1 à 9,
caractérisée en ce que
• la machine-outil comprend un dispositif de mesure automatique (13), pour la mesure de la position axiale des lames (6, 6', 26, 26") par rapport au support (2, 2') respectivement du banc (30) de la machine-outil (1) et
• une unité de commande (29) calcule la valeur de correction ainsi définie en tant que différence entre la valeur réelle et la valeur de consigne et provoque automatiquement la correction de la distance axiale (11) de la lame respective (6, 26) dans le sens des X.

12. Machine-outil selon l'une des revendications précédentes,
caractérisée en ce que
l'unité d'outil de brochage par rotation (5a, 5a') éloignée plus loin du support (2, 2') peut être aménagée sur un support ultérieurement avec une unité existante d'outil de brochage par rotation (5, 5').

13. Machine-outil selon la revendication 12,
caractérisée en ce que
l'unité supplémentaire d'outil de brochage par rotation (5a, 5a') peut être fixée de manière définie au moyen d'une fermeture rapide sur des unités existantes d'outils de brochage (5, 5') respectivement sur la tige de logement existante d'outil (4, 4').

14. Machine-outil selon l'une des revendications précédentes,
caractérisée en ce que
les lames correspondantes entre elles (6, 26 respectivement 6', 26') d'un support (2, 2') sont disposées en décalé dans leur position angulaire par rapport à la position de pivotement (3, 3') de telle manière l'une par rapport à l'autre qu'à l'attaque d'une lame (6 respectivement 6') de l'une des unités d'outil de brochage par rotation (5 respectivement 5'), les lames voisines (26, 6 respectivement 26', 6') par rapport à la position angulaire, de l'autre unité d'outil de brochage par rotation (5' respectivement 5) du même support (2 respectivement 2') n'ont pas de contact avec le point d'usinage.

15. Machine-outil selon l'une des revendications précédentes,
caractérisée en ce que
les unités d'outil de brochage par rotation sont universellement interchangeables sur tous les supports existants (2, 2') et sont utilisables dans chaque position axiale par rapport à la tige de logement d'outil (4, 4') et sont interchangeables entre elles.

16. Machine-outil selon l'une des revendications précédentes,
caractérisée en ce que
l'extrémité libre de la tige de logement d'outil (4, 4') est soutenue par un pont (18) qui est reliée fixement par le support correspondant (2, 2').

17. Machine-outil selon l'une des revendications précédentes,
caractérisée en ce qu'
une unité de stockage qui est associée à la machine-outil ou à l'unité d'outil de brochage par rotation (5, 5'), mémorise durablement les valeurs radiales et axiales de correction de chacune des lames (6, 6') dans la version mesurée la plus récente même au démontage de l'unité respective d'outil de brochage par rotation (5, 5a).

18. Procédé pour l'usinage par enlèvement de copeau de surfaces d'outils symétrique en rotation
• par tournage/brochage rotatif au moyen d'au moins une unité d'outil de brochage par rotation (5, 5') mobile sur un support d'outil dans le sens des X et des Z, avec plusieurs lames dans la zone périphérique
• chaque support portant plusieurs unités d'outil (5, 5') d'outil de brochage par rotation pivotantes en commun à distance axiale l'une de l'autre,
• en particulier pour l'utilisation de la machine-outil selon l'une des revendications précédente,
caractérisé en ce qu'
avant chaque entrée en contact de la pièce d'usinage par une lame (6, 26)
• il se produit dans le sens axial des Z un déplacement de l'unité respective d'outil de brochage par rotation (5, 5a) respectivement de l'ensemble du support (2, 2') aux alentours de la valeur de correction et/ou
• il se produit dans le sens radial un déplacement de l'unité d'outil de brochage par rotation (5, 5') portant la lame (6, 26) par rapport à l'unité d'outil de brochage par rotation (5) fixée radialement sur le support (2).

19. Procédé selon la revendication 18,
caractérisée en ce que
uniquement une seule lame (6, 26) est momentanément en engagement sur l'ensemble des unités d'outil de brochage (5, 5') par rotation portées par un support (2, 2').

20. Procédé selon la revendication 18 ou 19,
caractérisée en ce que
pour la mise en oeuvre des mouvements de correction, le mouvement de pivotement des unités d'outil de brochage par rotation (5, 5a) n'est pas interrompu.
